# EUROPEAN PATENT APPLICATION

(11) **EP 4 786 522 A1**
(43) Date of publication of application: **05.08.2026**
(21) Application number: 24872075.7
(22) Date of filing: 20.09.2024
(51) Int. Cl.: C08G 69/26

(54) **POLYAMIDE RESIN**

(30) Priority: 29.09.2023 JP 2023169853
(71) Applicant: MITSUBISHI GAS CHEMICAL COMPANY, INC., Chiyoda-ku Tokyo 100-8324 (JP)
(72) Inventor: SHINOHARA Katsumi, Niigata-shi, Niigata 950-3121 (JP); YAMAICHI Aoto, Niigata-shi, Niigata 950-3121 (JP)
(74) Representative: Vossius & Partner Patentanwälte Rechtsanwälte mbB
(86) International application number: PCT/JP2024/033617
(87) International publication number: WO 2025/070284

(57) **Abstract**

A polyamide resin including a structural unit (A) derived from a diamine and a structural unit (B) derived from a dicarboxylic acid, wherein the structural unit (A) contains at least one structural unit (A1) selected from the group consisting of a m-xylylenediamine-derived structural unit and a p-xylylenediamine-derived structural unit, and an o-xylylenediamine-derived structural unit (A2), and a content of the structural unit (A2) is from 0.006 to 0.15 parts by mass with respect to 100 parts by mass of the structural unit (A1).

## Description

### Technical Field

The present invention relates to a polyamide resin.

### Background Art

A polyamide resin using xylylenediamine as a main diamine component has excellent mechanical properties such as strength and a modulus of elasticity, and thus is useful as various molding materials. The aforementioned polyamide resin is also useful as a packaging material because the polyamide resin is excellent in barrier properties against a gas such as oxygen or a carbonic acid gas.

In the case where a polyamide resin is used for a molding material or the like, it is known that crystallization rate is improved by adding a crystal nucleating agent to the polyamide resin to improve molding processability or the like of the polyamide resin and to improve transparency and physical properties of a resulting molded article.

For example, Patent Document 1 describes a crystal nucleating agent for a polyamide, the crystal nucleating agent being monoterpene diphenols, in which two molecules of phenols are bonded to one molecule of a monoterpene, and a metal salt of the monoterpene diphenols, and describes a polyamide composition containing the crystal nucleating agent.

### Citation List

### Patent Document

Patent Document 1: JP 11-158370 A

### Summary of Invention

### Technical Problem

Although the crystallization rate is increased when a crystal nucleating agent is added as described above, a step of mixing the crystal nucleating agent into a polyamide resin before molding processing is separately required, and thus there is a problem of causing limitations on the apparatus or method regarding the mixing and molding. Furthermore, because the crystal nucleating agent is dispersed in the polyamide resin, mechanical properties and transparency of a molded article made of the composition containing the polyamide resin may be deteriorated.

Thus, improvement in crystallization rate of the polyamide resin without use of a crystal nucleating agent has been demanded.

The present invention has been made in view of such a situation, and an object of the present invention is to provide a polyamide resin that has a high crystallization rate and that quickly crystallizes without use of a crystal nucleating agent.

### Solution to Problem

The inventors of the present invention found that the problems described above can be solved by allowing a polyamide resin having xylylenediamine-derived structural units to contain a specific ratio of isomers of xylylenediamine, and thus completed the present invention.

That is, the present invention relates to the following [1] to [11].
[1] A polyamide resin including a structural unit (A) derived from a diamine and a structural unit (B) derived from a dicarboxylic acid,
   wherein the structural unit (A) contains at least one structural unit (A1) selected from the group consisting of a m-xylylenediamine-derived structural unit and a p-xylylenediamine-derived structural unit, and an o-xylylenediamine-derived structural unit (A2), and
   a content of the structural unit (A2) is from 0.006 to 0.15 parts by mass with respect to 100 parts by mass of the structural unit (A1).
[2] The polyamide resin according to [1] above, where the dicarboxylic acid contains at least one type selected from the group consisting of an aliphatic dicarboxylic acid having from 4 to 20 carbon atoms, terephthalic acid, and isophthalic acid.
[3] The polyamide resin according to [2] above, where a total content of the structural unit (A1) and the structural unit (A2) in the structural unit (A) is 70 mol% or greater, and a content of a structural unit derived from the aliphatic dicarboxylic acid having from 4 to 20 carbon atoms in the structural unit (B) is 50 mol% or greater.
[4] The polyamide resin according to any one of [1] to [3] above, where the dicarboxylic acid contains at least one type selected from the group consisting of adipic acid, sebacic acid, and dodecanedioic acid.
[5] The polyamide resin according to any one of [1] to[4] above, where the structural unit (A1) is a m-xylylenediamine-derived structural unit.
[6] A method for producing a polyamide resin,
   the method including a step of performing a polycondensation reaction by introducing a diamine (a) and a dicarboxylic acid (b) into a reaction system,
   wherein the diamine (a) contains at least one diamine (a1) selected from the group consisting of m-xylylenediamine and p-xylylenediamine, and o-xylylenediamine (a2), and
   an introduction amount of o-xylylenediamine (a2) is from 0.006 to 0.15 parts by mass with respect to 100 parts by mass of the diamine (a1).
[7] The method for producing a polyamide resin according to [6] above, where the dicarboxylic acid (b) contains at least one type selected from the group consisting of an aliphatic dicarboxylic acid having from 4 to 20 carbon atoms, terephthalic acid, and isophthalic acid.
[8] The method for producing a polyamide resin according to [7] above, where a total introduction amount of the diamine (a1) and o-xylylenediamine (a2) in the diamine (a) is 70 mol% or greater, and a content of the aliphatic dicarboxylic acid having from 4 to 20 carbon atoms in the dicarboxylic acid (b) is 50 mol% or greater.
[9] The method for producing a polyamide resin according to any one of [6] to [8] above, where the dicarboxylic acid (b) contains at least one type selected from the group consisting of adipic acid, sebacic acid, and dodecanedioic acid.
[10] The method for producing a polyamide resin according to any one of [6] to [9] above, where the diamine (a1) is m-xylylenediamine.
[11] The method for producing a polyamide resin according to any one of [6] to [10] above, the method further including a step of performing solid-phase polymerization.

### Advantageous Effects of Invention

The present invention can provide a polyamide resin that has a high crystallization rate and that quickly crystallizes without use of a crystal nucleating agent. Because a molded article maintaining high transparency can be produced while molding processability improves as the crystallization rate of the polyamide resin improves, the polyamide resin of the present invention and a polyamide resin obtained by the production method of the present invention can be suitably used as a raw material for films for packaging, hollow containers, various molded articles, fibers, and the like.

### Description of Embodiments

### Polyamide Resin

The polyamide resin of the present invention is a polyamide resin including a diamine-derived structural unit (A) and a dicarboxylic acid-derived structural unit (B), the structural unit (A) contains at least one structural unit (A1) selected from the group consisting of a m-xylylenediamine-derived structural unit and a p-xylylenediamine-derived structural unit, and an o-xylylenediamine-derived structural unit (A2), and a content of the structural unit (A2) is from 0.006 to 0.15 parts by mass with respect to 100 parts by mass of the structural unit (A1).

The polyamide resin of the present invention includes a diamine-derived structural unit (A) and a dicarboxylic acid-derived structural unit (B).

Note that, in the polyamide resin of the present invention, the structural unit (A) and the structural unit (B) form an amide structure.

The structural unit (A) contains at least one structural unit (A1) selected from the group consisting of a m-xylylenediamine-derived structural unit and a p-xylylenediamine-derived structural unit, and an o-xylylenediamine-derived structural unit (A2), and the content of the structural unit (A2) is from 0.006 to 0.15 parts by mass with respect to 100 parts by mass of the structural unit (A1).

The polyamide resin of the present invention is also preferably a polyamide resin produced by using a recycled resin or a biomass raw material (biomass thermoplastic resin). A biomass thermoplastic resin can reduce environmental load.

For example, in the xylylenediamine-based polyamide resin, a bioadipic acid can be used as a biomass raw material. Adipic acid that has been mass balance certified (ISCC PLUS) can also be used. The mass balance certification means that degrees of usage of renewable raw materials and raw biomaterials for each factory or production facility and degrees of production and shipment of products are quantified and guaranteed along with quality.

### Structural Unit (A)

The structural unit (A) is a structural unit derived from a diamine and contains at least one structural unit (A1) selected from the group consisting of a m-xylylenediamine-derived structural unit and a p-xylylenediamine-derived structural unit, and an o-xylylenediamine-derived structural unit (A2), and the content of the structural unit (A2) is from 0.006 to 0.15 parts by mass with respect to 100 parts by mass of the structural unit (A1).

The structural unit (A1) is at least one structural unit selected from the group consisting of a m-xylylenediamine-derived structural unit and a p-xylylenediamine-derived structural unit and, from the viewpoints of gas barrier properties and crystallization rate, is preferably a m-xylylenediamine-derived structural unit. By allowing the structural unit (A1) to be contained, the polyamide resin of the present invention becomes excellent in crystallization rate, melt moldability, mechanical properties, and gas barrier properties.

The content of the structural unit (A1) in the structural unit (A) is preferably 70 mol% or greater, more preferably 80 mol% or greater, even more preferably 90 mol% or greater, yet even more preferably 95 mol% or greater, and yet even more preferably 99 mol% or greater, and the structural unit (A) may be composed only of the structural unit (A1) and the structural unit (A2). When the content of the structural unit (A1) is 70 mol% or greater, the polyamide resin of the present invention becomes excellent in crystallization rate, melt moldability, mechanical properties, and gas barrier properties.

The structural unit (A) further contains an o-xylylenediamine-derived structural unit (A2), and the content of the structural unit (A2) is from 0.006 to 0.15 parts by mass with respect to 100 parts by mass of the structural unit (A1).

From the viewpoints of improving crystallization rate and improving mechanical properties and from the viewpoint of polymerization efficiency, the content of the o-xylylenediamine-derived structural unit (A2) is from 0.006 to 0.15 parts by mass, preferably from 0.010 to 0.14 parts by mass, more preferably from 0.020 to 0.13 parts by mass, even more preferably from 0.030 to 0.12 parts by mass, yet even more preferably from 0.040 to 0.10 parts by mass, yet even more preferably from 0.050 to 0.10 parts by mass, yet even more preferably from 0.050 to 0.090 parts by mass, yet even more preferably from 0.050 to 0.080 parts by mass, and yet even more preferably from 0.050 to 0.070 parts by mass, with respect to 100 parts by mass of the structural unit (A1).

Furthermore, in particular, from the viewpoint of improving crystallization rate by a small amount of the o-xylylenediamine-derived structural unit, the content of the o-xylylenediamine-derived structural unit (A2) is from 0.006 to 0.080 parts by mass, preferably from 0.006 to 0.070 parts by mass, more preferably from 0.010 to 0.070 parts by mass, even more preferably from 0.010 to 0.060 parts by mass, yet even more preferably from 0.010 to 0.050 parts by mass, yet even more preferably from 0.010 to 0.040 parts by mass, yet even more preferably from 0.010 to 0.030 parts by mass, and yet even more preferably from 0.010 to 0.020 parts by mass, with respect to 100 parts by mass of the structural unit (A1).

The total content of the structural unit (A1) and the structural unit (A2) in the structural unit (A) is preferably 70 mol% or greater, more preferably 80 mol% or greater, even more preferably 90 mol% or greater, yet even more preferably 95 mol% or greater, and yet even more preferably 99 mol% or greater. The upper limit thereof is not limited and is preferably 100 mol% or less. The structural unit (A) may be composed only of the structural unit (A1) and the structural unit (A2). When the total content of the structural unit (A1) and the structural unit (A2) is 70 mol% or greater, the polyamide resin of the present invention becomes excellent in crystallization rate, melt moldability, mechanical properties, and gas barrier properties.

The structural unit (A) may contain a structural unit other than the structural unit (A1) and the structural unit (A2). That is, a structural unit derived from a diamine other than m-xylylenediamine, p-xylylenediamine, or o-xylylenediamine may be contained.

Examples of the diamine other than m-xylylenediamine, p-xylylenediamine, or o-xylylenediamine (a diamine from which the structural unit other than the structural unit (A1) and the structural unit (A2) is derived from) include, but are not limited to, aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethyl-hexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, and bis(aminomethyl)naphthalene. One type of these diamines can be used alone, or two or more types of these diamines can be used in combination.

### Structural Unit (B)

The structural unit (B) is a structural unit derived from a dicarboxylic acid.

From the viewpoints of crystallization rate, molding processability, gas barrier properties, and mechanical properties, the dicarboxylic acid (dicarboxylic acid from which the structural unit (B) is derived) preferably contains at least one type selected from the group consisting of an aliphatic dicarboxylic acid having from 4 to 20 carbon atoms, terephthalic acid, and isophthalic acid, more preferably contains an aliphatic dicarboxylic acid having from 4 to 20 carbon atoms, and even more preferably contains an aliphatic dicarboxylic acid having from 4 to 12 carbon atoms.

Furthermore, from the viewpoints of crystallization rate, molding processability, gas barrier properties, and mechanical properties, the dicarboxylic acid (dicarboxylic acid from which the structural unit (B) is derived) is more preferably at least one type selected from the group consisting of an aliphatic dicarboxylic acid having from 4 to 20 carbon atoms, terephthalic acid, and isophthalic acid, even more preferably an aliphatic dicarboxylic acid having from 4 to 20 carbon atoms, and yet even more preferably an aliphatic dicarboxylic acid having from 4 to 12 carbon atoms.

Examples of the aliphatic dicarboxylic acid having from 4 to 20 carbon atoms include succinic acid, glutaric acid, adipic acid, pimelic acid, suberic acid, azelaic acid, sebacic acid, undecanedioic acid, dodecanedioic acid, 1,1 1-undecanedicarboxylic acid, 1,12-dodecanedicarboxylic acid, 1,14-tetradecanedicarboxylic acid, 1,16-hexadecanedicarboxylic acid, and 1,18-octadecanedicarboxylic acid. Among these, from the viewpoints of crystallinity and high elasticity, at least one type selected from the group consisting of adipic acid, sebacic acid, and dodecanedioic acid is preferred, at least one type selected from the group consisting of adipic acid and sebacic acid is more preferred, and adipic acid is even more preferred. One type of these dicarboxylic acids may be used alone, or two or more types of these dicarboxylic acids may be used in combination.

Examples of an additional dicarboxylic acid that can be used as the dicarboxylic acid include aliphatic dicarboxylic acids having 3 or less carbon atoms, such as oxalic acid and malonic acid; and aromatic dicarboxylic acids other than terephthalic acid and isophthalic acid, such as 2,6-naphthalenedicarboxylic acid.

The content of the aliphatic dicarboxylic acid having from 4 to 20 carbon atoms in the dicarboxylic acid is preferably 50 mol% or greater, more preferably from 70 to 100 mol%, and even more preferably from 85 to 100 mol%. When the content of the aliphatic dicarboxylic acid having from 4 to 20 carbon atoms in the dicarboxylic acid is in the range described above, the resulting polyamide resin has excellent crystallization rate, molding processability, gas barrier properties, and mechanical properties. Note that the content of the aliphatic dicarboxylic acid having from 4 to 20 carbon atoms in the dicarboxylic acid is the same as the content of the structural unit derived from the aliphatic dicarboxylic acid having from 4 to 20 carbon atoms in the structural unit (B). That is, from the viewpoints same as those described above, the content of the structural unit derived from the aliphatic dicarboxylic acid having from 4 to 20 carbon atoms in the structural unit (B) is preferably 50 mol% or greater, more preferably from 70 to 100 mol%, and even more preferably from 85 to 100 mol%.

By allowing the polyamide resin of the present invention to have the constitution described above, a polyamide resin having a high crystallization rate is formed while high transparency is maintained. Because the molding processability improves as the crystallization rate of the polyamide resin improves, crystallization process time during molding can be shortened. That is, molding cycle becomes faster, and thus productivity of the molded article can also improve. Furthermore, problems, such as deterioration in mechanical properties and transparency of the molded article due to addition of a crystal nucleating agent for improving molding processability of the polyamide resin, can be prevented.

### Characteristics and the Like of Polyamide Resin

The polyamide resin of the present invention has a high crystallization rate and crystallizes quickly. Thus, because the molding processability of the polyamide resin improves, crystallization process time during molding can be shortened. That is, molding cycle becomes faster and thus productivity of the molded article can also improve. Furthermore, problems, such as deterioration in mechanical properties and transparency of the molded article due to addition of a crystal nucleating agent for improving molding processability of the polyamide resin, can be also prevented.

The crystallization rate of the polyamide resin can be evaluated by measuring a crystallization half-time. The crystallization half-time as referred to herein indicates a time until the crystallization is advanced a half in the case where a certain crystalline material transitions from a fused state to a crystallized state, and a shorter crystallization half-time is found to indicate a higher crystallization rate and faster crystallization of that material.

The crystallization half-time at 120°C of the polyamide resin of the present invention is preferably 3000 seconds or less, more preferably 2950 seconds or less, even more preferably 2900 seconds or less, yet even more preferably 2800 seconds or less, and yet even more preferably 2700 seconds or less. Specifically, the crystallization half-time can be measured by a method described in Examples.

Depending on the use or purpose thereof, the polyamide resin can contain an additive such as delustering agents, heat stabilizers, weather-resistant agents, UV absorbents, plasticizers, flame retardants, antistatic agents, coloration inhibitors, and gelling inhibitors in a range that does not impair the effects of the present invention.

The polyamide resin of the present invention can be molded into various forms by a known molding method. Examples of the molding method include molding methods such as injection molding, blow molding, extrusion molding, compression molding, vacuum molding, press molding, direct blow molding, rotational molding, sandwich molding, and two-color molding.

The polyamide resin of the present invention can shorten the crystallization process time during molding because the crystallization rate improves. That is, molding cycle becomes faster and thus productivity can also improve. Furthermore, the polyamide resin having a high crystallization rate of the present invention is suitable as a material for films for packaging, hollow containers, various molded articles, fibers, and the like and, because transparency of the molded article is not impaired, is particularly suitable for films for packaging requiring high transparency, hollow containers, and the like.

### Method for Producing Polyamide Resin

The polyamide resin of the present invention may be produced by any method but is preferably obtained by the following production method. Furthermore, the method for producing a polyamide resin described below is also included in the present invention.

The method for producing a polyamide resin of the present invention is a method for producing a polyamide resin, the method including a step of performing a polycondensation reaction by introducing a diamine (a) and a dicarboxylic acid (b) into a reaction system, the diamine (a) being at least one diamine (a1) selected from the group consisting of m-xylylenediamine and p-xylylenediamine, and o-xylylenediamine (a2), and an introduction amount of o-xylylenediamine (a2) being from 0.006 to 0.15 parts by mass with respect to 100 parts by mass of the diamine (a1).

The method for producing a polyamide resin of the present invention also preferably produces a polyamide resin by using a recycled resin or a biomass raw material (biomass thermoplastic resin). By producing the biomass thermoplastic resin by using a recycled resin or a biomass raw material, environmental load can be reduced.

For example, in production of a xylylenediamine-based polyamide resin, a bioadipic acid can be used as a biomass raw material. Adipic acid that has been mass balance certified (ISCC PLUS) can also be used. The mass balance certification means that degrees of usage of renewable raw materials and raw biomaterials for each factory or production facility and degrees of production and shipment of products are quantified and certified together with quality.

The method for producing the polyamide resin of the present invention includes performing a polycondensation reaction by introducing a diamine (a) and a dicarboxylic acid (b) into a reaction system.

The diamine (a) is at least one diamine (a1) selected from the group consisting of m-xylylenediamine and p-xylylenediamine, and o-xylylenediamine (a2), and the introduction amount of o-xylylenediamine (a2) is from 0.006 to 0.15 parts by mass with respect to 100 parts by mass of the diamine (a1).

### Diamine (a)

The diamine (a) in the present production method contains at least one diamine (a1) selected from the group consisting of m-xylylenediamine and p-xylylenediamine, and o-xylylenediamine (a2), and the introduction amount of o-xylylenediamine (a2) being from 0.006 to 0.15 parts by mass with respect to 100 parts by mass of the diamine (a1).

The diamine (a1) is at least one diamine selected from the group consisting of m-xylylenediamine and p-xylylenediamine and, from the viewpoints of gas barrier properties and crystallization rate, is preferably m-xylylenediamine. By allowing the diamine (a1) to be contained, the polyamide resin obtained by the present production method becomes excellent in crystallization rate, melt moldability, mechanical properties, and gas barrier properties.

The introduction amount of the diamine (a1) in the diamine (a) is preferably 70 mol% or greater, more preferably 80 mol% or greater, even more preferably 90 mol% or greater, yet even more preferably 95 mol% or greater, and yet even more preferably 99 mol% or greater, and the diamine (a) may be composed only of the diamine (a1) and the diamine (a2). When the introduction amount of the diamine (a1) is 70 mol% or greater, the polyamide resin obtained by the present production method becomes excellent in crystallization rate, melt moldability, mechanical properties, and gas barrier properties.

The diamine (a) further contains o-xylylenediamine (a2), and the introduction amount of o-xylylenediamine (a2) is from 0.006 to 0.15 parts by mass with respect to 100 parts by mass of the diamine (a1).

From the viewpoints of improving crystallization rate and improving mechanical properties and from the viewpoint of polymerization efficiency, the introduction amount of o-xylylenediamine (a2) is from 0.006 to 0.15 parts by mass, preferably from 0.010 to 0.14 parts by mass, more preferably from 0.020 to 0.13 parts by mass, even more preferably from 0.030 to 0.12 parts by mass, yet even more preferably from 0.040 to 0.10 parts by mass, yet even more preferably from 0.05 to 0.10 parts by mass, yet even more preferably from 0.050 to 0.090 parts by mass, yet even more preferably from 0.050 to 0.080 parts by mass, and yet even more preferably from 0.050 to 0.070 parts by mass, with respect to 100 parts by mass of the diamine (a1).

Furthermore, in particular, from the viewpoint of improving crystallization rate by a small amount of o-xylylenediamine (a2), the introduction amount of o-xylylenediamine (a2) is from 0.006 to 0.080 parts by mass, preferably from 0.006 to 0.070 parts by mass, more preferably from 0.010 to 0.070 parts by mass, even more preferably from 0.010 to 0.060 parts by mass, yet even more preferably from 0.010 to 0.050 parts by mass, yet even more preferably from 0.010 to 0.040 parts by mass, yet even more preferably from 0.010 to 0.030 parts by mass, and yet even more preferably from 0.010 to 0.020 parts by mass, with respect to 100 parts by mass of the diamine (a1).

The total introduction amount of the diamine (a1) and o-xylylenediamine (a2) in the diamine (a) is preferably 70 mol% or greater, more preferably 80 mol% or greater, even more preferably 90 mol% or greater, yet even more preferably 95 mol% or greater, and yet even more preferably 99 mol% or greater. The upper limit thereof is not limited and is preferably 100 mol% or less. The diamine (a) may be composed only of the diamine (a1) and o-xylylenediamine (a2). When the total introduction amount of the diamine (a1) and o-xylylenediamine (a2) is 70 mol% or greater, the polyamide resin obtained by the present production method becomes excellent in crystallization rate, melt moldability, mechanical properties, and gas barrier properties.

The diamine (a) may contain a diamine other than the diamine (a1) and o-xylylenediamine (a2). That is, a diamine other than m-xylylenediamine, p-xylylenediamine, or o-xylylenediamine may be contained.

Examples of the diamine other than m-xylylenediamine, p-xylylenediamine, or o-xylylenediamine include, but are not limited to, aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethyl-hexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, and bis(aminomethyl)naphthalene. One type of these diamines can be used alone, or two or more types of these diamines can be used in combination.

### Dicarboxylic Acid (b)

From the viewpoints of crystallization rate, molding processability, gas barrier properties, and mechanical properties, the dicarboxylic acid (b) preferably contains at least one type selected from the group consisting of an aliphatic dicarboxylic acid having from 4 to 20 carbon atoms, terephthalic acid, and isophthalic acid, more preferably contains an aliphatic dicarboxylic acid having from 4 to 20 carbon atoms, and even more preferably contains an aliphatic dicarboxylic acid having from 4 to 12 carbon atoms.

Furthermore, from the viewpoints of crystallization rate, molding processability, gas barrier properties, and mechanical properties, the dicarboxylic acid (b) is preferably at least one type selected from the group consisting of an aliphatic dicarboxylic acid having from 4 to 20 carbon atoms, terephthalic acid, and isophthalic acid, more preferably an aliphatic dicarboxylic acid having from 4 to 20 carbon atoms, and even more preferably an aliphatic dicarboxylic acid having from 4 to 12 carbon atoms.

Examples of the aliphatic dicarboxylic acid having from 4 to 20 carbon atoms include succinic acid, glutaric acid, adipic acid, pimelic acid, suberic acid, azelaic acid, sebacic acid, undecanedioic acid, dodecanedioic acid, 1,1 1-undecanedicarboxylic acid, 1,12-dodecanedicarboxylic acid, 1,14-tetradecanedicarboxylic acid, 1,16-hexadecanedicarboxylic acid, and 1,18-octadecanedicarboxylic acid. Among these, from the viewpoints of crystallinity and high elasticity, at least one type selected from the group consisting of adipic acid, sebacic acid, and dodecanedioic acid is preferred, at least one type selected from the group consisting of adipic acid and sebacic acid is more preferred, and adipic acid is even more preferred. One type of these dicarboxylic acids may be used alone, or two or more types of these dicarboxylic acids may be used in combination.

Examples of an additional dicarboxylic acid that can be used as the dicarboxylic acid (b) include aliphatic dicarboxylic acids having 3 or less carbon atoms, such as oxalic acid and malonic acid; and aromatic dicarboxylic acids other than terephthalic acid and isophthalic acid, such as 2,6-naphthalenedicarboxylic acid.

The content (introduction amount) of the aliphatic dicarboxylic acid having from 4 to 20 carbon atoms in the dicarboxylic acid (b) is preferably 50 mol% or greater, more preferably from 70 to 100 mol%, and even more preferably from 85 to 100 mol%. When the content (introduction amount) of the aliphatic dicarboxylic acid having from 4 to 20 carbon atoms in the dicarboxylic acid is in the range described above, the resulting polyamide resin has excellent crystallization rate, molding processability, gas barrier properties, and mechanical properties.

### Polycondensation Reaction

The polycondensation reaction of the diamine (a) and the dicarboxylic acid (b) is not particularly limited, and any method such as a pressurization method or an atmospheric dropping method can be used. An example is a method of performing melt polycondensation (melt polymerization).

A specific example is a method, in which a salt made of a diamine and a dicarboxylic acid is heated in the presence of water in an atmospheric pressure or pressurized state and subjected to polycondensation in a molten state while removing the added water and water formed by the polycondensation. In addition, another example is a method, in which a diamine is added directly to a dicarboxylic acid in a molten state and then subjected to polycondensation at atmospheric pressure or under increased pressure. In this case, to maintain the reaction system in a uniform liquid state, the diamine is continuously added to the dicarboxylic acid, and during this time, polycondensation is allowed to proceed while the temperature of the reaction system is raised so that the reaction temperature does not fall below the melting points of the produced oligoamide and polyamide.

Among those described above, use of a melt polymerization method, in which a diamine is added dropwise in a molten dicarboxylic acid at atmospheric pressure or under increased pressure and then the mixture is polymerized in a molten state while removing condensed water, is preferred because the molecular weight distribution of the resulting polyamide resin can be made small.

The method of introducing o-xylylenediamine (a2) into the reaction system is not particularly limited. Examples thereof include a method in which o-xylylenediamine (a2) is directly introduced into a polycondensation reaction system, and a method in which a mixture of o-xylylenediamine (a2) and an additional diamine (including (a1)) or o-xylylenediamine (a2) and a dicarboxylic acid is introduced to a reaction system.

Examples of the method of adjusting o-xylylenediamine (a2) to the aforementioned introduction amount include a method of adding o-xylylenediamine (a2) and a method of adding the diamine (a1).

Specifically, in the present invention, for example, as a raw material of each component contained in the diamine (a) (hereinafter, also referred to as "raw material diamine (a)"), a mixture containing isomers can be used. That is, for example, as a raw material for the diamine (a1) (hereinafter, also referred to as "raw material diamine (a1)''), a crude product, in which o-xylylenediamine coexists, formed during production of m-xylylenediamine and/or p-xylylenediamine can be used. In such a case, the introduction amount of o-xylylenediamine (a2) can be appropriately adjusted to the aforementioned introduction amount by addition of o-xylylenediamine (a2) or diamine (a1) having high purity into the crude product when the diamine (a) is produced (prepared).

The method for producing a polyamide resin of the present invention preferably includes a step of measuring an amount of o-xylylenediamine (a2) contained in the raw material diamine (a) or the raw material diamine (a1) before introduction of the diamine (a) and the dicarboxylic acid (b) to the reaction system. Furthermore, the method preferably includes a step of measuring the amount of o-xylylenediamine (a2) contained in the raw material diamine (a) or the raw material diamine (a1) and adjusting the introduction amount of o-xylylenediamine (a2) to 0.006 to 0.15 parts by mass with respect to 100 parts by mass of the diamine (a1).

Examples of the method of adjusting the amount to the aforementioned introduction amount include a method of adding o-xylylenediamine (a2) and a method of adding the diamine (a1).

An example of the measurement of the amount of o-xylylenediamine (a2) is a method including performing GC measurement of the diamine (a) or the diamine (a1) (e.g., the raw material diamine (a) or the raw material diamine (al)), creating a calibration curve, and determining the content of o-xylylenediamine (a2) from a ratio of the peak value originated from the diamine (a1) and the peak value originated from o-xylylenediamine (a2).

Furthermore, the production of the diamine (a1) (m-xylylenediamine, p-xylylenediamine, or a mixture of these) used in the present invention can employ a method of utilizing a reaction that forms a predetermined amount of o-xylylenediamine (a2) by setting the used catalyst and/or production condition to specific configurations if such reaction can be performed in parallel. In this case, the content of o-xylylenediamine (a2) in the diamine (a1) can be determined by gas chromatography (GC) analysis or the like. An example is a method including performing GC measurement of the diamine (a1) containing o-xylylenediamine (a2), creating a calibration curve, and determining the content of o-xylylenediamine (a2) from a ratio of the peak value originated from the diamine (a1) and the peak value originated from o-xylylenediamine (a2).

The molar ratio of the diamine to the dicarboxylic acid (diamine/dicarboxylic acid) is preferably from 0.9 to 1.1, more preferably from 0.93 to 1.07, even more preferably from 0.95 to 1.05, and yet even more preferably from 0.97 to 1.02. When the molar ratio is in the range described above, increase in molecular weight tends to progress.

To promote the amidation reaction, a phosphorus atom-containing compound may be added to the polycondensation reaction system. Examples of the phosphorus atom-containing compound include phosphinic acid compounds, such as dimethyl phosphinic acid and phenyl methyl phosphinic acid; hypophosphorous acid compounds, such as hypophosphorous acid, sodium hypophosphite, potassium hypophosphite, lithium hypophosphite, magnesium hypophosphite, calcium hypophosphite, and ethyl hypophosphite; phosphonic acid compounds, such as phosphonic acid, sodium phosphonate, potassium phosphonate, lithium phosphonate, potassium phosphonate, magnesium phosphonate, calcium phosphonate, phenyl phosphonate, ethyl phosphonate, sodium phenyl phosphonate, potassium phenyl phosphonate, lithium phenyl phosphonate, diethyl phenyl phosphonate, sodium ethyl phosphonate, and potassium ethyl phosphonate; phosphonous acid compounds, such as phosphonous acid, sodium phosphonite, lithium phosphonite, potassium phosphonite, magnesium phosphonite, calcium phosphonite, phenyl phosphonite, sodium phenyl phosphonite, potassium phenyl phosphonite, lithium phenyl phosphonite, and ethyl phenyl phosphonite; and phosphorous acid compounds, such as phosphorous acid, sodium hydrogen phosphite, sodium phosphite, lithium phosphite, potassium phosphite, magnesium phosphite, calcium phosphite, triethyl phosphite, triphenyl phosphite, and pyrophosphite.

Among these, in particular, metal hypophosphites such as sodium hypophosphite, potassium hypophosphite, and lithium hypophosphite are preferably used from the viewpoint of promoting the amidation reaction, and sodium hypophosphite is particularly preferred. Note that the phosphorus atom-containing compound that can be used in the present invention is not limited to these compounds.

From the viewpoint of promoting the amidation reaction, the added amount of the phosphorus atom-containing compound added to the polycondensation reaction system in terms of phosphorus atom concentration in the polyamide resin is preferably from 0.1 to 1000 ppm, more preferably from 1 to 600 ppm, and even more preferably from 5 to 400 ppm.

From the viewpoint of controlling the polycondensation reaction rate, an alkali metal compound may also be allowed to coexist in the polycondensation reaction system.

As the alkali metal compound, an alkali metal hydroxide and/or an alkali metal acetate is usually used. Examples thereof include lithium hydroxide, sodium hydroxide, potassium hydroxide, rubidium hydroxide, cesium hydroxide, lithium acetate, sodium acetate, potassium acetate, rubidium acetate, and cesium acetate, and at least one type selected from the group consisting of sodium hydroxide and sodium acetate is preferred. One type of these can be used alone, or two or more types of these can be used in combination.

Note that the alkali metal compound described above may be separately added to the polycondensation reaction system or may be derived from a dicarboxylic acid which is a raw material of the polyamide resin.

The used amount of the alkali metal compound in terms of alkali metal atom concentration in the polyamide resin is preferably from 0.05 to 1000 ppm, more preferably from 0.25 to 600 ppm, and even more preferably from 0.5 to 400 ppm. The used amount is a total amount of the alkali metal compound added to the polycondensation system and the alkali metal compound derived from a dicarboxylic acid which is a raw material of the polyamide resin.

Furthermore, the used amount of the alkali metal compound is an amount that makes a value obtained by dividing the number of moles of the alkali metal compound by the number of moles of the phosphorus atom-containing compound described above preferably a range of 0.5 to 1.0, more preferably 0.55 to 0.95, and even more preferably 0.6 to 0.9. When the amount is in the range described above, the amidation reaction progresses at an appropriate rate.

In the case where a sodium compound is used as the alkali metal compound described above, a ratio of the sodium atom concentration to the phosphorus atom concentration (Na/P) in the polyamide resin is preferably from 0.4 to 0.9, more preferably from 0.4 to 0.8, and even more preferably from 0.4 to 0.7. When the ratio is in the range described above, the amidation reaction progresses at an appropriate rate, and control of the molecular weight of the polyamide resin becomes easier.

The phosphorus atom concentration and the sodium atom concentration in the polyamide resin can be measured by a known method such as ICP emission spectral analysis, ICP mass analysis, or X-ray photoelectron spectroscopic analysis.

The temperature of the polycondensation reaction is preferably from 150 to 300°C, more preferably from 160 to 280°C, and even more preferably from 170 to 270°C. When the polymerization temperature is in the range described above, the polymerization reaction rapidly progresses. Furthermore, thermal decomposition of the monomers, the oligomer, polymer, or the like in the middle of the polymerization is less likely to occur, and thus properties of the resulting polyamide resin become favorable.

The time of the polycondensation reaction is preferably from 1 to 5 hours from the beginning of dropwise addition of the diamine. By setting the polycondensation reaction time to the range described above, the molecular weight of the polyamide resin can be adequately increased, and coloring of the resulting polyamide resin can be also suppressed.

The polyamide resin obtained as described above is taken out from a polymerization tank and preferably pelletized, then, as necessary, dried and/or crystallized, and then used.

Furthermore, to increase the degree of polymerization of the polyamide resin, the production method of the present invention preferably further includes a step of performing solid-phase polymerization. The solid-phase polymerization can be performed by a known method, and an example is a method in which heating is performed at a temperature that is 100°C or higher and lower than the melting point of the polyamide in a nitrogen atmosphere for 1 to 24 hours.

As a heating device to be used in drying or solid-phase polymerization, a continuous heating device, a rotary drum-type heating device called a tumble dryer, a conical dryer, or a rotary dryer, and a cone-shaped heating device equipped having a rotary blade inside, called a Nauta mixer, can be favorably used. However, the heating device is not limited to these, and a known device can be used.

The polyamide resin obtained by the production method of the present invention has a high crystallization rate while high transparency is maintained. Because the molding processability improves as the crystallization rate of the polyamide resin improves, crystallization process time during molding can be shortened. That is, molding cycle becomes faster and thus productivity of the molded article can also improve. Furthermore, problems, such as deterioration in mechanical properties and transparency due to addition of a crystal nucleating agent for improving molding processability of the polyamide resin, can be prevented.

### Examples

Hereinafter, the present invention will be specifically described with reference to Examples. However, the present invention is not limited by these Examples at all. Note that the measurements in the present Examples were performed by the following methods.

### Crystallization Half-Time (Evaluation of Crystallization Rate)

Crystallization half-time of pellets of a polyamide resin obtained after solid-phase polymerization in each of Examples and Comparative Example was measured.

The crystallization half-time was measured by using a depolarization light intensity analyzer (model: MK701, available from Kotaki Seisakusho Co., Ltd.) under the following conditions. The aforementioned polyamide resin pellets were sliced into approximately 1.5 mm, and thus a test piece was obtained. Then, the test piece was set on the aforementioned device and melted at 280°C for 90 seconds, and then immersed in an oil bath at 120°C, and the crystallization half-time at 120°C was measured.

The crystallization half-time for the polyamide resin obtained in each of Examples and Comparative Example is shown in Table 1. A shorter crystallization half-time is preferred because the crystallization rate is higher and the crystallization progresses faster.

### Crystallization Half-Time Reduction Efficiency (Evaluation of Improvement Effect of Crystallization Rate)

A reduction percentage of the crystallization half-time with respect to the content of o-xylylenediamine-derived structural unit (introduction amount of o-xylylenediamine) was calculated by the following equation as the crystallization half-time reduction efficiency. A larger value of the crystallization half-time reduction efficiency is preferred because the crystallization rate with respect to the amount of o-xylylenediamine is higher. (Crystallization half-time reduction efficiency) = [(crystallization half-time of polyamide resin of Comparative Example 1 (sec)) - (crystallization half-time of polyamide resin of each of Examples (sec))]/(introduction amount of o-xylylenediamine of each of Examples)

However, the introduction amount of o-xylylenediamine is an introduction amount (part by mass) with respect to 100 parts by mass of m-xylylenediamine (introduction amount of o-xylylenediamine (a2) is an introduction amount (part by mass) with respect to 100 parts by mass of the diamine (a1)).

### Production of Polyamide Resin

### Example 1

### Preparation of o-Xylylenediamine-Containing m-Xylylenediamine

Approximately 10 kg of m-xylylenediamine containing o-xylylenediamine (o-xylylenediamine-containing m-xylylenediamine) prepared in a manner that the content of o-xylylenediamine was 0.081 parts by mass with respect to 100 parts by mass of m-xylylenediamine was prepared.

### Polycondensation Reaction

A reaction vessel equipped with a stirrer, a partial condenser, a total condenser, a thermometer, a dropping funnel, a nitrogen introduction tube, and a strand die was charged with 10 kg (68.43 mol) of adipic acid (available from BASF) and, after sufficient nitrogen purging, the mixture was heated to 194°C and melted while the system was stirred under a small nitrogen stream.

Then, under stirring, 9.265 kg (68.03 mol) of the o-xylylenediamine-containing m-xylylenediamine was added dropwise to the molten adipic acid, and the internal temperature was continuously increased to 240°C over a period of 2 hours while condensation water that was generated was discharged outside of the system.

After dropwise addition of the o-xylylenediamine-containing m-xylylenediamine was completed, the internal temperature was increased. When the temperature reached 250°C, the pressure inside the reaction vessel was reduced. The internal temperature was then further increased, and a melt polycondensation reaction was continued for 20 minutes at 255°C. Subsequently, the inside of the system was pressurized with nitrogen, and the obtained polymer was taken out from the strand die and pelletized, and thus a polyamide resin after the polycondensation reaction and before solid-phase polymerization was obtained.

### Solid-Phase Polymerization

300 g of the polyamide resin after the polycondensation reaction and before solid-phase polymerization described above was charged in a 2 L eggplant flask and, after sufficient nitrogen purging, heated at 190°C in an oil bath for 4 hours while the pressure was reduced to perform solid-phase polymerization, and thus a polyamide resin (1) was obtained.

### Example 2

The polyamide resin (2) was obtained by the same method as in Example 1 except that approximately 10 kg of o-xylylenediamine-containing m-xylylenediamine prepared in a manner that the content of o-xylylenediamme was 0.060 parts by mass with respect to 100 parts by mass of m-xylylenediamine was prepared and used for the polycondensation reaction.

### Example 3

The polyamide resin (3) was obtained by the same method as in Example 1 except that approximately 10 kg of o-xylylenediamine-containing m-xylylenediamine prepared in a manner that the content of o-xylylenediamine was 0.038 parts by mass with respect to 100 parts by mass of m-xylylenediamine was prepared and used for the polycondensation reaction.

### Example 4

The polyamide resin (4) was obtained by the same method as in Example 1 except that approximately 10 kg of o-xylylenediamine-containing m-xylylenediamine prepared in a manner that the content of o-xylylenediamine was 0.013 parts by mass with respect to 100 parts by mass of m-xylylenediamine was prepared and used for the polycondensation reaction.

### Example 5

The polyamide resin (5) was obtained by the same method as in Example 1 except that approximately 10 kg of o-xylylenediamine-containing m-xylylenediamine prepared in a manner that the content of o-xylylenediamine was 0.008 parts by mass with respect to 100 parts by mass of m-xylylenediamine was prepared and used for the polycondensation reaction.

### Comparative Example 1

The polyamide resin (6) was obtained by the same method as in Example 1 except that approximately 10 kg of o-xylylenediamine-containing m-xylylenediamine prepared in a manner that the content of o-xylylenediamine was 0.005 parts by mass with respect to 100 parts by mass of m-xylylenediamine was prepared and used for the polycondensation reaction.

### [Table 1]

**Table 1**

| | | Example 1 | Example 2 | Example 3 | Example 4 | Example 5 | Comparative Example 1 |
|---|---|---|---|---|---|---|---|
| Dicarboxylic acid | Adipic acid (mol) | 68.43 | 68.43 | 68.43 | 68.43 | 68.43 | 68.43 |
| Diamine | m-Xylylenediamine (mol) | 68.03 | 68.03 | 68.03 | 68.03 | 68.03 | 68.03 |
| | o-Xylylenediamine (part by mass with respect to 100 parts by mass of m-xylylenediamine) | 0.081 | 0.060 | 0.038 | 0.013 | 0.008 | 0.005 |
| Solid-phase polymerization | | Performed | Performed | Performed | Performed | Performed | Performed |
| Evaluation of crystallization rate | Crystallization half-time (second) | 2670 | 2668 | 2702 | 2905 | 2976 | 3023 |
| Evaluation of improvement effect of crystallization rate | Crystallization half-time reduction efficiency (improved amount of crystallization half-time/o-xylylenediamine amount) | 4358 | 5917 | 8447 | 9077 | 5875 | - |

As shown in Table 1, it was found that the polyamide resins of Examples each had improved crystallization rate than that of the polyamide resin obtained by the method of Comparative Example by controlling the amount of the o-xylylenediamine-derived structural unit to the particular range.

Thus, because the polyamide resin of the present invention has a high crystallization rate and quickly crystallizes, molding processability improves, and the polyamide resin can produce a molded article maintaining high transparency and can be suitably used as a raw material for films for packaging, hollow containers, various molded articles, fibers, and the like.

## Claims

1. A polyamide resin comprising a structural unit (A) derived from a diamine and a structural unit (B) derived from a dicarboxylic acid,
wherein the structural unit (A) contains at least one structural unit (A1) selected from the group consisting of a m-xylylenediamine-derived structural unit and a p-xylylenediamine-derived structural unit, and an o-xylylenediamine-derived structural unit (A2), and
a content of the structural unit (A2) is from 0.006 to 0.15 parts by mass with respect to 100 parts by mass of the structural unit (A1).

2. The polyamide resin according to claim 1, wherein the dicarboxylic acid contains at least one type selected from the group consisting of an aliphatic dicarboxylic acid having from 4 to 20 carbon atoms, terephthalic acid, and isophthalic acid.

3. The polyamide resin according to claim 2, wherein a total content of the structural unit (A1) and the structural unit (A2) in the structural unit (A) is 70 mol% or greater, and a content of a structural unit derived from the aliphatic dicarboxylic acid having from 4 to 20 carbon atoms in the structural unit (B) is 50 mol% or greater.

4. The polyamide resin according to any one of claims 1 to 3, wherein the dicarboxylic acid contains at least one type selected from the group consisting of adipic acid, sebacic acid, and dodecanedioic acid.

5. The polyamide resin according to any one of claims 1 to 4, wherein the structural unit (A1) is a m-xylylenediamine-derived structural unit.

6. A method for producing a polyamide resin,
the method comprising a step of performing a polycondensation reaction by introducing a diamine (a) and a dicarboxylic acid (b) into a reaction system,
wherein the diamine (a) contains at least one diamine (a1) selected from the group consisting of m-xylylenediamine and p-xylylenediamine, and o-xylylenediamine (a2), and
an introduction amount of o-xylylenediamine (a2) is from 0.006 to 0.15 parts by mass with respect to 100 parts by mass of the diamine (a1).

7. The method for producing a polyamide resin according to claim 6, wherein the dicarboxylic acid (b) contains at least one type selected from the group consisting of an aliphatic dicarboxylic acid having from 4 to 20 carbon atoms, terephthalic acid, and isophthalic acid.

8. The method for producing a polyamide resin according to claim 7, wherein a total introduction amount of the diamine (a1) and o-xylylenediamine (a2) in the diamine (a) is 70 mol% or greater, and an introduction amount of the aliphatic dicarboxylic acid having from 4 to 20 carbon atoms in the dicarboxylic acid (b) is 50 mol% or greater.

9. The method for producing a polyamide resin according to any one of claims 6 to 8, wherein the dicarboxylic acid (b) contains at least one type selected from the group consisting of adipic acid, sebacic acid, and dodecanedioic acid.

10. The method for producing a polyamide resin according to any one of claims 6 to 9, wherein the diamine (a1) is m-xylylenediamine.

11. The method for producing a polyamide resin according to any one of claims 6 to 10, the method further comprising a step of performing solid-phase polymerization.
